# EUROPÄISCHE PATENTANMELDUNG

(11) **EP 4 593 282 A1**
(43) Veröffentlichungstag der Anmeldung: **30.07.2025**
(21) Anmeldenummer: 24154429.5
(22) Anmeldetag: 29.01.2024
(51) Int. Cl.: H02P 3/02

(54) **STROMGEREGELTE EINSTELLUNG DES HALTESTROMS EINER HALTEBREMSE EINES ELEKTRISCHEN ANTRIEBS**

(71) Anmelder: Siemens Aktiengesellschaft, 80333 München (DE)
(72) Erfinder: Hoffmann, Andreas, 91077 Neunkirchen am Brand (DE)
(74) Vertreter: Siemens Patent Attorneys

(57) **Zusammenfassung**

Einem elektrischen Antrieb (1), insbesondere einem Servomotor, ist eine Haltebremse (5) zugeordnet. Die Haltebremse (5) wird mittels eines elektromagnetischen Aktuators (6) betätigt. Der Aktuator (6) überführt die Haltebremse (5) von einem Sperrzustand, in dem die Haltebremse (5) den elektrischen Antrieb (1) blockiert, in einen Freigabezustand, in dem die Haltebremse (5) den elektrischen Antrieb (1) nicht blockiert, sobald der Aktuator (6) mit einem Betriebsstrom (I) oberhalb eines Mindestanzugsstroms (11) beaufschlagt wird. Der Aktuator (6) hält die Haltebremse (5) im Freigabezustand, solange der Aktuator (6) nach dem Überführen der Haltebremse (5) in den Freigabezustand mit einem Betriebsstrom (I) oberhalb eines Mindesthaltestroms (I2) beaufschlagt wird, wobei der Mindesthaltestrom (I2) kleiner als der Mindestanzugsstrom (I1) ist. Der Aktuator (6) überführt die Haltebremse (5) vom Freigabezustand in den Sperrzustand, sobald der Aktuator (6) nicht mehr mit einem Betriebsstrom (I) beaufschlagt wird oder nur mit einem Betriebsstrom (I) unterhalb des Mindesthaltestroms (I2) beaufschlagt wird. In einem Normalbetrieb nimmt eine Aktuatorsteuereinrichtung (11) für den Aktuator (6) nach einem Überführen der Haltebremse (5) in den Freigabezustand immer wieder einen erfassten Messwert für den Betriebsstrom (I) entgegen und führt die Ansteuerung (C) eines elektronischen Stromstellers (7), über welchen der Aktuator (6) mit dem Betriebsstrom (I) versorgt wird, bei Bedarf immer wieder derart nach, dass der Betriebsstrom (I) auf einen vorbestimmten Haltestrom (I3) oberhalb des Mindesthaltestroms (I2) abgesenkt und dort gehalten wird.

## Beschreibung

Die vorliegende Erfindung geht aus von einem Betriebsverfahren für eine Haltebremse eines elektrischen Antriebs, insbesondere eines Servomotors,
- wobei die Haltebremse mittels eines elektromagnetischen Aktuators betätigt wird, wobei der Aktuator
   - die Haltebremse von einem Sperrzustand, in dem die Haltebremse den elektrischen Antrieb blockiert, in einen Freigabezustand überführt, in dem die Haltebremse den elektrischen Antrieb nicht blockiert, so-bald der Aktuator mit einem Betriebsstrom oberhalb eines Mindestanzugsstroms beaufschlagt wird,
   - die Haltebremse im Freigabezustand hält, solange der Aktuator nach dem Überführen der Haltebremse in den Freigabezustand mit einem Betriebsstrom oberhalb eines Mindesthaltestroms beaufschlagt wird, wobei der Mindesthaltestrom kleiner als der Mindestanzugsstrom ist, und
   - die Haltebremse vom Freigabezustand in den Sperrzustand überführt, sobald der Aktuator nicht mehr mit einem Betriebsstrom beaufschlagt wird oder nur mit einem Betriebsstrom unterhalb des Mindesthaltestroms beaufschlagt wird.

Die vorliegende Erfindung geht weiterhin aus von einer Antriebsanordnung,
- wobei die Antriebsanordnung einen elektrischen Antrieb umfasst, insbesondere einen Servomotor,
- wobei die Antriebsanordnung eine Haltebremse umfasst, die mit dem elektrischen Antrieb derart zusammenwirkt, dass sie den Antrieb in einem Sperrzustand der Haltebremse blockiert und in einem Freigabezustand nicht blockiert,
- wobei die Haltebremse einen elektromagnetischen Aktuator aufweist, mittels dessen die Haltebremse durch Beaufschlagen des Aktuators mit einem Betriebsstrom oberhalb eines Mindestanzugsstroms vom Sperrzustand in den Freigabezustand überführbar ist, nach dem Überführen in den Freigabezustand durch Beaufschlagen des Aktuators mit einem Betriebsstrom oberhalb eines Mindesthaltestroms, der kleiner als der Mindestanzugsstrom ist, im Freigabezustand haltbar ist und durch Beaufschlagen des Aktuators mit einem Betriebsstrom unterhalb des Mindesthaltestroms oder Nichtbeaufschlagen mit einem Betriebsstrom vom Freigabezustand in den Sperrzustand überführbar ist.

Derartige Betriebsverfahren und die zugehörigen Antriebsanordnungen sind allgemein bekannt.

Elektrische Antriebe, insbesondere Servomotoren, sind oftmals mit einer Haltebremse versehen. Eine derartige Halte-bremse blockiert in einem Sperrzustand das Verfahren des Antriebs. In einem Freigabezustand blockiert sie das Verfahren des Antriebs nicht. Im Freigabezustand ist das Verfahren des Antriebs also freigegeben.

Die Haltebremse wird mittels eines elektromagnetischen Aktuators betätigt. Aus Sicherheitsgründen befindet sich die Haltebremse im nicht bestromten Zustand im Sperrzustand.

Die Ansteuerung des Aktuators erfolgt im Stand der Technik spannungsbasiert. Zum Überführen der Haltebremse vom Sperrzustand in den Freigabezustand wird eine hinreichend große Spannung an den Aktuator angelegt, so dass sich ein hinreichend großer Strom ergibt, aufgrund dessen der Aktuator die Haltebremse in den Freigabezustand überführt. Ebenso wird auch zum Halten der Haltebremse im Freigabezustand eine hinreichend große Spannung an den Aktuator angelegt, so dass sich ein hinreichend großer Strom ergibt, aufgrund dessen der Aktuator die Haltebremse im Freigabezustand hält. Die Spannung zum Halten der Haltebremse im Freigabezustand kann die gleiche Spannung wie die Spannung zum Überführen der Haltebremse in den Freigabezustand oder eine niedrigere, aber immer noch hinreichend hohe Spannung sein. Zum Überführen der Haltebremse in den Sperrzustand wird die Spannungsversorgung des Aktuators abgeschaltet.

Die Vorgehensweise des Standes der Technik ist mit verschiedenen Nachteilen verbunden.

So benötigt das Überführen der Haltebremse vom Sperrzustand in den Freigabezustand eine bestimmte Zeit. Im Stand der Technik wird dieser Sachverhalt dadurch berücksichtigt, dass auf Seiten einer Antriebssteuerung für den elektrischen Antrieb eine Wartezeit parametriert ist, die ab dem Ansteuern des Aktuators zum Überführen der Haltebremse in den Freigabezustand abgewartet wird, bevor mit dem Verfahren des elektrischen Antriebs begonnen wird. Diese Wartezeit wird im Stand der Technik üblicherweise als Bremsenöffnungszeit bezeichnet.

In analoger Weise benötigt auch das Überführen der Halte-bremse vom Freigabezustand in den Sperrzustand eine bestimmte Zeit. Im Stand der Technik wird dieser Sachverhalt dadurch berücksichtigt, dass auf Seiten der Antriebssteuerung eine weitere Wartezeit parametriert ist, die ab dem Beenden des Ansteuerns des Aktuators zum Überführen der Haltebremse in den Sperrzustand abgewartet wird. Während dieser Wartezeit wird der Antrieb von der Antriebssteuerung noch aktiv derart angesteuert, dass er auf seiner aktuellen Position gehalten wird, also nicht verfahren wird. Erst nach Ablauf dieser Wartezeit wird das Ansteuern des elektrischen Antriebs beendet. Diese Wartezeit wird im Stand der Technik üblicherweise als Bremsenschließzeit bezeichnet. Vor dem Überführen der Haltebremse in den Sperrzustand wird somit zunächst der Antrieb aktiv in den Stillstand überführt. Dann wird an eine Aktuatorsteuereinrichtung für den Aktuator der Befehl zum Überführen der Haltebremse in den Sperrzustand gegeben. Während der Bremsenschließzeit wird der Antrieb weiterhin mit entsprechen-der aktiver Ansteuerung im Stillstand gehalten. Erst nach Ablauf der Bremsenschließzeit wird die Ansteuerung des Antriebs beendet.

Weiterhin muss der Aktuator während des Zeitraums, in dem die Haltebremse sich im Freigabezustand befindet, permanent mit einem hinreichend großen Betriebsstrom beaufschlagt werden, da die Haltebremse anderenfalls wieder in den Sperrzustand übergehen würde. Dadurch verbraucht der Aktuator elektrische Energie.

Die Aufgabe der vorliegenden Erfindung besteht darin, Möglichkeiten zu schaffen, mittels derer die Nachteile des Standes der Technik so weit wie möglich beseitigt werden können.

Die Aufgabe wird durch ein Betriebsverfahren mit den Merk-malen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren der eingangs genannten Art dadurch ausgestaltet, dass in einem Normalbetrieb eine Aktuatorsteuereinrichtung für den Aktuator nach einem Überführen der Haltebremse in den Freigabezustand immer wieder einen erfassten Messwert für den Betriebsstrom entgegennimmt und die Ansteuerung eines elektronischen Stromstellers, über welchen der Aktuator mit dem Betriebsstrom versorgt wird, bei Bedarf immer wieder derart nachführt, dass der Betriebsstrom auf einen vorbestimmten Haltestrom oberhalb des Mindesthaltestroms abgesenkt und dort gehalten wird.

Der Stromsteller wird von der Aktuatorsteuereinrichtung also nicht derart angesteuert, dass ausgangsseitig des Stromstellers eine vorgegebene Spannung eingestellt wird und sich dadurch ein Betriebsstrom einstellt, der noch oberhalb des Mindesthaltestroms liegt, dessen genauer Wert aber nicht bekannt ist. Denn in diesem Fall wäre der sich einstellende Betriebsstrom nicht auf den vorbestimmten Haltestrom geregelt. Genau eine derartige Regelung erfolgt jedoch durch die vorliegende Erfindung. Somit kann ein definierter Haltestrom eingestellt werden, der nur noch geringfügig (eine gewisse Mindestreserve sollte eingehalten werden) über dem Mindesthaltestrom liegt.

Die vorliegende Erfindung beruht somit auf der Erkenntnis, dass es für das Halten der Haltebremse im Freigabezustand nicht auf die angelegte Spannung ankommt, sondern auf den Strom. Denn der Strom bewirkt das Magnetfeld, welche den Aktuator betätigt.

Durch die erfindungsgemäße Vorgehensweise können die elektrischen Verluste beim Halten der Haltebremse im Freigabezustand so weit wie möglich reduziert werden. Weiterhin werden thermische Effekte, welche den Widerstand des Aktuators beeinflussen, ganz von selbst mit kompensiert.

Die genaue Ausgestaltung des elektronischen Stromstellers ist von untergeordneter Bedeutung. Beispielsweise kann der Stromsteller als Halbbrücke mit zwei Halbleiterschaltern oder als Tiefsetzsteller mit einem einzelnen Halbleiter-schalter ausgebildet sein. Im letztgenannten Fall ist zusätzlich eine Freilaufdiode vorhanden. Auch andere Ausgestaltungen sind denkbar. Der Halbleiterschalter kann bzw. die Halbleiterschalter können beispielsweise als IGBTs oder als Feldeffekttransistoren ausgebildet sein. Die Feldeffekttransistoren können insbesondere als MOSFETs ausgebildet sein. Die Halbleiterschalter können beispiels-weise auf GaN-Basis ausgebildet sein.

Vorzugsweise ist vorgesehen, dass im Normalbetrieb die Aktuatorsteuereinrichtung zum Überführen der Haltebremse in den Freigabezustand
- den elektronischen Stromsteller derart ansteuert, dass der dem Aktuator zugeführte Betriebsstrom auf einen Wert oberhalb des Mindestanzugsstroms ansteigt,
- immer wieder einen erfassten Messwert für den Betriebsstrom entgegennimmt und den erfassten Messwert auf einen kurzzeitigen Einbruch überwacht,
- die Erkennung eines kurzzeitigen Einbruchs des Betriebsstroms als Überführen der Haltebremse in den Freigabezustand interpretiert und
- unmittelbar nachfolgend den Betriebsstrom auf den Haltestrom absenkt und/oder eine Freigabemeldung an eine Antriebssteuerung für den elektrischen Antrieb übermittelt.

Dadurch wird erreicht, dass der Betriebsstrom des Aktuators so bald wie möglich - nämlich unmittelbar nach dem Überführen der Haltebremse in den Freigabezustand - auf den Haltestrom abgesenkt werden kann bzw. so früh wie möglich mit dem Ansteuern des Antriebs begonnen werden kann. Es muss also nicht eine vorab parametrierte (und in der Praxis stets mit einer Sicherheitsreserve festgelegte) feste Wartezeit abgewartet werden.

Der genaue Wert, auf den der Betriebsstrom zum Überführen der Haltebremse in den Freigabezustand eingestellt wird, ist von untergeordneter Bedeutung. Es kann sich um einen vorbestimmten Wert geringfügig oder auch deutlich oberhalb des Mindestanzugsstroms handeln. Genau genommen ist es aber nicht einmal erforderlich, den Betriebsstrom zum Überführen der Haltebremse in den Freigabezustand auf einen bestimmten Wert zu regeln. Entscheidend ist lediglich, dass der Messwert für den Betriebsstrom erfasst wird und die Überwachung des Betriebsstroms auf den kurzzeitigen Einbruch erfolgt. Denn dieser Einbruch tritt beim Anziehen des Aktuators und damit beim tatsächlichen Überführen der Haltebremse in den Freigabezustand auf. Nach dem Einbruch - der während des Überführens der Haltebremse vom Sperrzustand in den Haltezustand auftritt - kann somit das Absenken auf den Haltestrom eingeleitet werden.

Die Spannung, die an den Aktuator zum Überführen der Haltebremse in den Freigabezustand angelegt wird, kann sogar größer als im Stand der Technik sein. Dadurch kann die Zeitspanne, die zum Überführen der Haltebremse in den Freigabezustand benötigt wird, reduziert werden. Die relativ hohe Spannung ist deshalb unschädlich, weil im Rahmen der vorliegenden Erfindung der Betriebsstrom bereits unmittelbar nach dem tatsächlichen Überführen der Haltebremse in den Freigabezustand auf den Haltestrom geregelt wird. Einem unkontrollierten Ansteigen des Betriebsstroms, wie es im Stand der Technik bei einer relativ hohen Spannung in Verbindung mit der vorab parametrierten festen Bremsenöffnungszeit auftreten könnte und würde, wird also ab dem Überführen der Haltebremse in den Freigabezustand sofort entgegengewirkt.

In den Fällen, in denen der Betriebsstrom beim Überführen der Haltebremse vom Sperrzustand in den Freigabezustand auf einen bestimmten Wert oberhalb des Mindestanzugsstroms geregelt werden soll, ist vorzugsweise vorgesehen, dass die Aktuatorsteuereinrichtung in einem Sonderbetrieb
- den Stromsteller derart ansteuert, dass eine Betriebsspannung, mit welcher der Aktuator beaufschlagt wird, allmählich erhöht wird,
- während des allmählichen Erhöhens der Betriebsspannung immer wieder einen erfassten Messwert für den Betriebsstrom entgegennimmt und den erfassten Messwert auf einen kurzzeitigen Einbruch überwacht,
- die Erkennung eines kurzzeitigen Einbruchs des Betriebs-stroms als Überführen der Haltebremse in den Freigabezustand interpretiert und
- anhand des Messwertes für den Betriebsstrom kurz vor und/oder kurz nach dem Einbruch den Mindestanzugsstrom ermittelt.

Der Betriebsstrom unmittelbar vor dem Einbruch oder unmittelbar nach dem Einbruch entspricht dem Mindestanzugsstrom. Anhand des Mindestanzugsstroms kann ohne weiteres der Anzugsstrom ermittelt werden, beispielsweise durch Addieren eines Offsets oder Skalieren mit einem Faktor, der größer als 1 ist. Es reicht aus, wenn der Offset klein ist oder der Faktor nur geringfügig größer als 1 ist. Der Off-set kann aber auch größer sein bzw. der Faktor auch nennenswert größer als 1 sein. Das Erhöhen der Betriebsspannung kann kontinuierlich oder in (kleinen) Stufen erfolgen.

In manchen Fällen ist der Mindesthaltestrom vorab bekannt. Beispielsweise kann er in einem Datenblatt angegeben sein. Wenn der Mindesthaltestrom vorab bekannt ist, kann er der Antriebssteuerung direkt als Parameter vorgegeben werden. In der Regel ist der Mindesthaltestrom jedoch nicht bekannt. Unabhängig davon, ob der Mindesthaltestrom vorab bekannt ist oder nicht, ist vorzugsweise vorgesehen, dass die Aktuatorsteuereinrichtung in einem Sonderbetrieb
- den Stromsteller nach einem Überführen der Haltebremse in den Freigabezustand derart ansteuert, dass eine Betriebsspannung, mit welcher der Aktuator beaufschlagt wird, allmählich verringert wird,
- während des allmählichen Verringerns der Betriebsspannung immer wieder einen erfassten Messwert für den Betriebsstrom entgegennimmt und den erfassten Messwert auf einen kurzzeitigen Anstieg überwacht,
- die Erkennung eines kurzzeitigen Anstiegs des Betriebs-stroms als Überführen der Haltebremse in den Sperrzustand interpretiert und
- anhand des Messwertes für den Betriebsstrom kurz vor dem Anstieg den Haltestrom für den Normalbetrieb ermittelt.

Dadurch kann auf einfache Art und Weise der vorbestimmte Haltestrom ermittelt werden. Insbesondere korrespondiert der Messwert für den Betriebsstrom kurz vor dem Anstieg mit dem Mindesthaltestrom. Anhand des Mindesthaltestroms kann ohne weiteres der Haltestrom ermittelt werden, beispielsweise durch Addieren eines (kleinen) Offsets oder Skalieren mit einem Faktor, der (geringfügig) größer als 1 ist. Das Verringern der Betriebsspannung kann kontinuierlich oder in (kleinen) Stufen erfolgen.

Diese Vorgehensweise beruht auf dem Sachverhalt, dass aufgrund der Induktivität des Aktuators beim Abfallen des elektromagnetischen Aktuators und damit beim Überführen der Haltebremse in den Sperrzustand ein kurzzeitiger Anstieg erfolgt. Der Betriebsstrom unmittelbar vor dem Einbruch entspricht dem Mindesthaltestrom.

Vorzugsweise ist vorgesehen, dass die Aktuatorsteuereinrichtung im Normalbetrieb zum Überführen der Haltebremse in den Sperrzustand
- den Stromsteller sperrt, so dass der Betriebsstrom allmählich abklingt,
- immer wieder einen erfassten Messwert für den Betriebsstrom entgegennimmt und den erfassten Messwert auf einen kurzzeitigen Anstieg überwacht,
- die Erkennung eines kurzzeitigen Anstiegs des Betriebsstroms als Überführen der Haltebremse in den Sperrzustand interpretiert und
- aufgrund des Erkennens des kurzzeitigen Anstiegs des Betriebsstroms eine Sperrmeldung an eine Antriebssteuerung für den elektrischen Antrieb übermittelt.

Diese Vorgehensweise beruht auf dem Sachverhalt, dass die Induktivität des Aktuators bewirkt, dass der Betriebsstrom nicht abrupt, sondern (prinzipiell exponentiell) allmählich auf Null absinkt. Beim Abfallen des Aktuators und da-mit beim tatsächlichen Überführen der Haltebremse in den Sperrzustand erfolgt jedoch entgegen dem prinzipiell exponentiellen Abfall ein kurzzeitiger Anstieg des Betriebs-stroms. Erst wenn die Haltebremse sich im Sperrzustand be-findet, kann jedoch die Ansteuerung des Antriebs (mittels derer der Antrieb bis zu diesem Zeitpunkt aktiv an seiner Position gehalten werden muss) beendet werden. Aufgrund der Sperrmeldung kann die Antriebssteuerung das aktive Ansteuern des Antriebs so früh wie möglich beenden, nämlich unmittelbar nach dem Überführen der Haltebremse in den Sperrzustand. Die Antriebssteuerung muss also nicht eine vorab parametrierte (und in der Praxis stets mit einer Sicherheitsreserve bestimmte) feste Wartezeit abwarten.

Vorzugsweise ist vorgesehen,
- dass die Aktuatorsteuereinrichtung den Betriebsstrom im Normalbetrieb mittels eines Stromreglers regelt, der an-hand der Abweichung des Betriebsstroms von einem Sollbetriebsstrom einen Proportional-Korrekturanteil und einen Integral-Korrekturanteil ermittelt, welche beide in die Ermittlung der Ansteuerung des Stromstellers eingehen,
- dass der Proportional-Korrekturanteil sich als Produkt eines konstanten Verstärkungsfaktors und der Abweichung des Betriebsstroms vom Sollbetriebsstrom ergibt,
- dass die Aktuatorsteuereinrichtung in einem Sonderbetrieb eine Betriebsspannung, mit welcher der Aktuator beaufschlagt wird, variiert und den sich jeweils ergebenden Betriebsstrom erfasst,
- dass die Aktuatorsteuereinrichtung anhand der Betriebsspannungen und der jeweils zugehörigen Betriebsströme einen Widerstand des Aktuators ermittelt und
- dass die Aktuatorsteuereinrichtung den Verstärkungsfaktor anhand des ermittelten Widerstands bestimmt.

Der Stromregler, mittels dessen die Ansteuerung des Strom-stellers ermittelt wird, umfasst somit zumindest einen Proportionalanteil und einen Integralanteil. Der Stromregler ist also als PI-Regler oder besser ausgebildet. Die Vorgehensweise zur Bestimmung des Verstärkungsfaktors bewirkt, dass im Normalbetrieb bereits der Proportional-Korrekturanteil eine schnelle und sehr gute Regelung auf den jeweiligen Sollbetriebsstrom bewirkt, also nur ein kleiner Schleppfehler verbleibt. Dieser Schleppfehler wird durch den Integral-Korrekturanteil ausgeregelt. Die Auslegung des Integralanteils des Stromreglers ist daher unkritisch und kann vom Fachmann ohne weiteres festgelegt wer-den.

Das Variieren der Betriebsspannung und das Erfassen des sich jeweils ergebenden Betriebsstroms können in einer eigenständigen Betriebsart erfolgen. Vorzugsweise erfolgen das Variieren der Betriebsspannung und das Erfassen des sich jeweils ergebenden Betriebsstroms jedoch in Verbindung mit dem allmählichen Erhöhen der Betriebsspannung im Rahmen der Ermittlung des Mindestanzugsstroms und/oder in Verbindung mit dem allmählichen Verringern der Betriebsspannung im Rahmen der Ermittlung des Haltestroms.

Die Aufgabe wird weiterhin durch eine Antriebsanordnung mit den Merkmalen des Anspruchs 7 gelöst. Erfindungsgemäß wird eine Antriebsanordnung der eingangs genannten Art dadurch ausgestaltet,
- dass die Antriebsanordnung einen elektronischen Strom-steller aufweist, mittels dessen der Aktuator mit dem Betriebsstrom beaufschlagbar ist,
- dass die Antriebsanordnung eine dem Stromsteller oder dem Aktuator zugeordnete Erfassungseinrichtung zum Er-fassen des Betriebsstroms aufweist,
- dass die Antriebsanordnung eine Aktuatorsteuereinrichtung für den Aktuator aufweist, welche zum Ansteuern des Stromstellers mit dem Stromsteller verbunden ist und zum Entgegennehmen des jeweils erfassten Betriebsstroms mit der Erfassungseinrichtung verbunden ist, und
- dass die Aktuatorsteuereinrichtung derart ausgebildet ist, insbesondere programmiert ist, dass sie in einem Normalbetrieb nach einem Überführen der Haltebremse in den Freigabezustand von der Erfassungseinrichtung immer wieder einen erfassten Messwert für den Betriebsstrom entgegennimmt und die Ansteuerung des Stromstellers bei Bedarf immer wieder derart nachführt, dass der Betriebsstrom auf einen vorbestimmten Haltestrom oberhalb des Mindesthaltestroms abgesenkt und dort gehalten wird.

Die dadurch bewirkten Vorteile korrespondieren mit denen des Betriebsverfahrens.

Vorzugsweise ist die Aktuatorsteuereinrichtung weiterhin derart ausgebildet, insbesondere programmiert, dass sie die Verfahrensschritte der bevorzugten Ausgestaltungen des Betriebsverfahrens implementiert. Auch hier korrespondieren die dadurch bewirkten Vorteile mit denen der entsprechenden Ausgestaltung des Betriebsverfahrens.

Die oben beschriebenen Eigenschaften, Merkmale und Vorteile dieser Erfindung sowie die Art und Weise, wie diese er-reicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Dar-stellung:
- FIG 1: eine Antriebsanordnung,
- FIG 2: eine weitere Antriebsanordnung,
- FIG 3: ein Spannungs-Zeit-Diagramm,
- FIG 4: ein Strom-Zeit-Diagramm,
- FIG 5: ein Zustands-Zeit-Diagramm,
- FIG 6: ein Ablaufdiagramm,
- FIG 7: ein Ablaufdiagramm,
- FIG 8: ein Ablaufdiagramm,
- FIG 9: eine Reglerstruktur und
- FIG 10: ein Ablaufdiagramm.

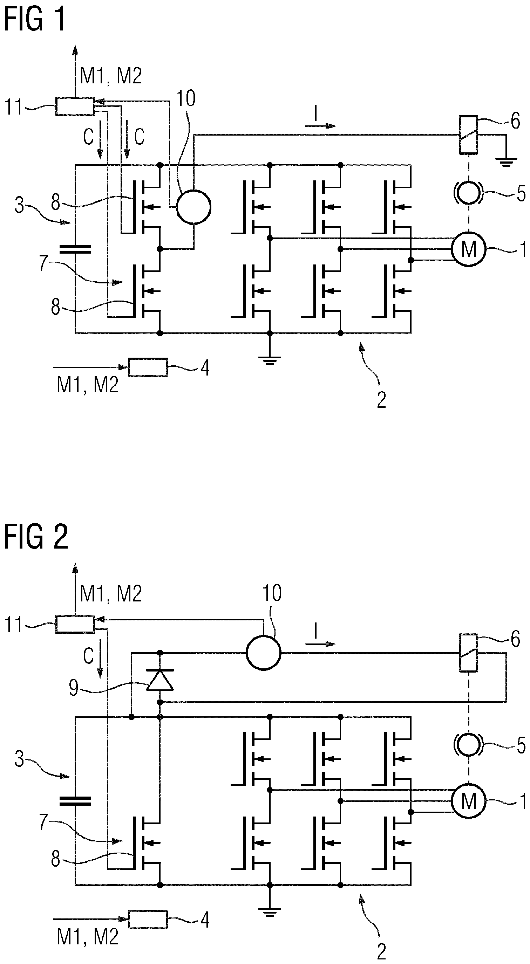

Gemäß den FIG 1 und 2 umfasst eine Antriebsanordnung einen elektrischen Antrieb 1. Der Antrieb 1 kann insbesondere als Servomotor ausgebildet sein. Der Antrieb 1 wird in der Regel über eine Umrichtereinheit 2 aus einem Gleichspannungskreis 3 gespeichert. Die Umrichtereinheit 2 wird von einer Antriebssteuerung 4 gesteuert. Sowohl die Ausgestaltung als auch die Wirkungsweise der Antriebssteuerung 4 sind konventioneller Art und werden daher nachstehend nicht näher erläutert.

Die Antriebsanordnung umfasst weiterhin eine Haltebremse 5. Die Haltebremse 5 wirkt, wie in den FIG 1 und 2 durch eine gestrichelte Linie angedeutet ist, mit dem elektrischen Antrieb 1 zusammen. Insbesondere kann sich die Haltebremse 5 alternativ in einem Sperrzustand oder in einem Freigabezustand befinden. Im Sperrzustand blockiert die Haltebremse 5 ein Verfahren des Antriebs 1, im Freigabezustand blockiert sie ein Verfahren des Antriebs 1 nicht. Im Freigabezustand ist der Antrieb 1 somit freigegeben und kann durch entsprechende Ansteuerung der Umrichtereinheit 2 durch die Antriebssteuerung 4 verfahren werden. Die Haltebremse 5 wird gemäß den FIG 1 und 2 mittels eines elektromagnetischen Aktuators 6 betätigt, der über einen elektronischen Stromsteller 7 mit einem Betriebsstrom I beaufschlagt wird. Der Zustand, in welchem der Betriebsstrom I den Wert 0 aufweist, entspricht einem Nichtbeaufschlagen mit dem Betriebsstrom I.

Der Stromsteller 7 kann gemäß FIG 1 als Halbbrücke mit zwei in Reihe geschalteten Halbleiterschaltern 8 ausgebildet sein. Den Halbleiterschaltern 8 parallelgeschaltete Freilaufdioden können intrinsische Bestandteile der Halbleiterschalter 8 sein und sind daher in FIG 1 nicht mit dargestellt. Der Stromsteller 7 kann gemäß FIG 2 alternativ als Tiefsetzsteller ausgebildet sein, der einen einzelnen Halbleiterschalter 8 aufweist. In diesem Fall ist entsprechend der Darstellung in FIG 2 eine separate Freilaufdiode 9 erforderlich. Der Aufbau und die Betriebsweise derartiger und auch anderer Stromsteller 7 sind Fachleuten allgemein bekannt und müssen daher nicht näher erläutert werden.

Gemäß den FIG 1 und 2 wird der Stromsteller 7 über denselben Gleichspannungskreis 3 mit elektrischer Energie versorgt,
über den auch die Umrichtereinheit 2 mit elektrischer Energie versorgt wird. Diese Ausgestaltung ist zwar nicht zwingend. Sie weist aber den Vorteil auf, dass bei einem Ausfall der Energieversorgung der Umrichtereinheit 2 automatisch auch die Energieversorgung des Aktuators 6 ausfällt und somit die Haltebremse 5 automatisch in den Sperrzustand überführt wird.

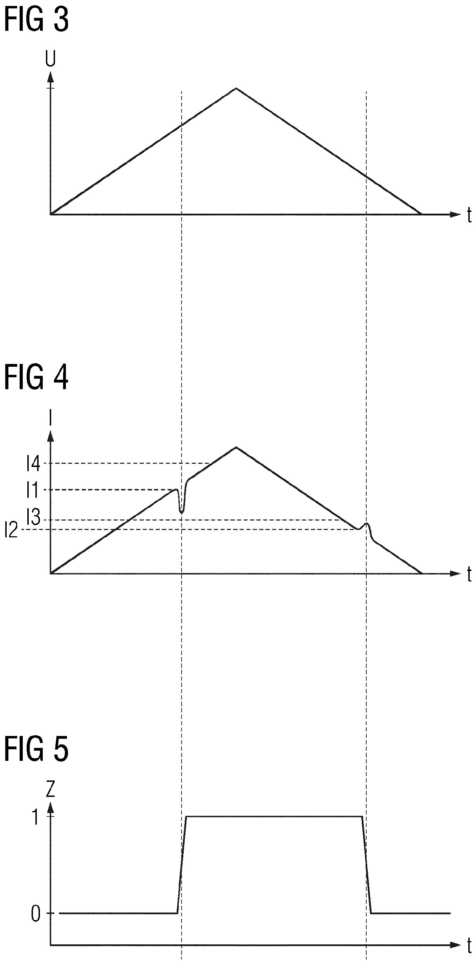

Nachfolgend werden in Verbindung mit den FIG 3 bis 5 die Funktionsweise des Stromstellers 7 und des Aktuators 6 (und damit auch der Haltebremse 5) erläutert.

FIG 3 zeigt als Funktion der Zeit t eine von dem Strom-steller 7 an den Aktuator 6 angelegte Betriebsspannung U. Die Betriebsspannung U steigt gemäß FIG 3 aufgrund einer entsprechenden Ansteuerung C des Stromstellers 7 im Laufe der Zeit t allmählich von 0 auf einen Maximalwert an und sinkt danach aufgrund einer entsprechenden Ansteuerung C des Stromstellers 7 im Laufe der Zeit t wieder allmählich auf Null ab. Das Ansteigen und das Absinken erfolgen in der Darstellung gemäß FIG 3 relativ langsam (meist im ein-stelligen Sekundenbereich).

FIG 4 zeigt als Funktion der Zeit t den jeweils korrespondierenden Betriebsstrom I. Gemäß FIG 4 folgt der Betriebsstrom I zunächst der Betriebsspannung U. Dies hat seine Ursache in dem langsamen Ansteigen der Betriebsspannung U. Denn dadurch kommt eine Induktivität des elektromagnetischen Aktuators 6 nicht zum Tragen, so dass der Betriebsstrom I der Betriebsspannung U folgen kann. Der Quotient von jeweiliger Betriebsspannung U und jeweiligem Betriebsstrom I entspricht dem Widerstand des Aktuators 6.

FIG 5 zeigt als Funktion der Zeit t den jeweils korrespondierenden Zustand der Haltebremse 5. Gemäß FIG 5 verharrt die Haltebremse 5 zunächst im Sperrzustand (Zustand Z = 0), bis der Betriebsstrom I einen bestimmten Wert 11 er-reicht, nachfolgend als Mindestanzugsstrom bezeichnet. So-bald der Betriebsstrom I den Mindestanzugsstrom 11 er-reicht, zieht der Aktuator 6 an, so dass er die Haltebremse 5 in den Freigabezustand (Zustand Z = 1) überführt. Durch das Anziehen verändert sich die Induktivität des Aktuators 6. Diese Veränderung bewirkt entsprechend der Dar-stellung in FIG 4 einen kurzzeitigen charakteristischen Einbruch des Betriebsstroms I. Dieser Einbruch stellt einen - kurzzeitigen - Sonderzustand dar, während dessen der Betriebsstrom I der Betriebsspannung U nicht folgen kann.

Beim weiteren Ansteigen der Betriebsspannung U und damit auch des Betriebsstroms I verbleibt der Aktuator 5 im an-gezogenen Zustand und verbleibt damit die Haltebremse 5 im Freigabezustand. Die Induktivität des Aktuator 6 ändert sich nicht mehr. Dadurch kann der Betriebsstroms I wieder der Betriebsspannung U folgen. Der Quotient von jeweiliger Betriebsspannung U und jeweiligem Betriebsstrom I entspricht wieder dem Widerstand des Aktuators 6.

Beim Absenken der Betriebsspannung U verharrt die Halte-bremse 5 zunächst im Freigabezustand. Somit folgt der Betriebsstrom I gemäß FIG 4 zunächst der Betriebsspannung U. Dies hat seine Ursache in dem langsamen Absinken der Betriebsspannung U. Denn dadurch kommt die Induktivität des elektromagnetischen Aktuators 6 nicht zum Tragen, so dass der Betriebsstrom I der Betriebsspannung U folgen kann.

Gemäß FIG 5 verharrt die Haltebremse 5 zunächst im Freigabezustand, bis der Betriebsstrom I einen bestimmten Wert I2 erreicht, nachfolgend als Mindesthaltestrom bezeichnet. Sobald der Betriebsstrom I jedoch den Mindesthaltestrom I2 erreicht, fällt der Aktuator 6 ab, so dass er die Haltebremse 5 in den Sperrzustand überführt. Durch das Abfallen verändert sich erneut die Induktivität des Aktuators 6. Diese Veränderung bewirkt entsprechend der Darstellung in FIG 4 einen kurzzeitigen charakteristischen Anstieg des Betriebsstroms I. Dieser Anstieg stellt einen - kurzzeitigen - Sonderzustand dar, während dessen der Betriebsstrom I der Betriebsspannung U nicht folgen kann. Der Mindesthaltestrom I2 ist kleiner als der Mindestanzugsstrom 11.

Beim weiteren Absinken der Betriebsspannung U und damit auch des Betriebsstroms I verbleibt der Aktuator 5 im abgefallenen Zustand und verbleibt damit die Haltebremse 5 im Sperrzustand. Die Induktivität des Aktuator 6 ändert sich nicht mehr. Dadurch kann der Betriebsstroms I wieder der Betriebsspannung U folgen.

Die Antriebsanordnung weist gemäß den FIG 1 und 2 weiter-hin eine Erfassungseinrichtung 10 auf. Mittels der Erfassungseinrichtung 10 kann der Betriebsstrom I messtechnisch erfasst werden. Die Erfassungseinrichtung 10 kann nach Bedarf dem Stromsteller 7 oder dem Aktuator 6 zugeordnet sein.

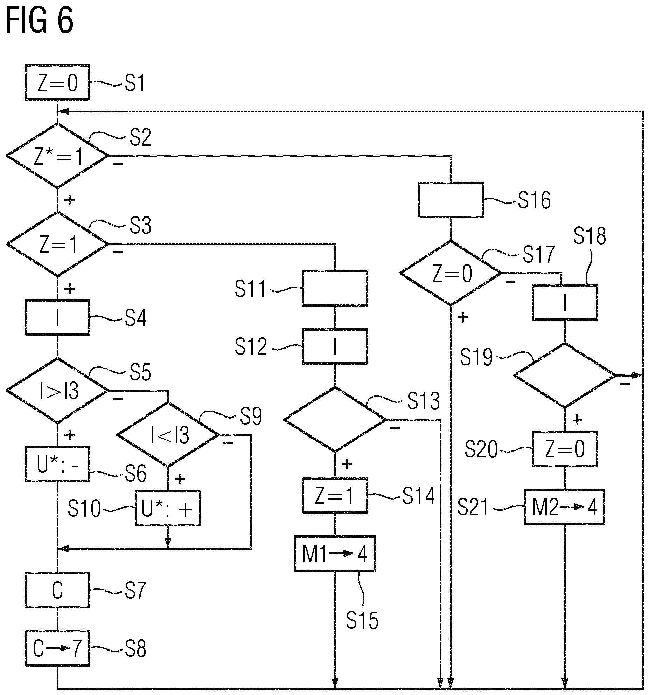

Schließlich weist die Antriebsanordnung eine Aktuatorsteuereinrichtung 11 auf. Die Aktuatorsteuereinrichtung 11 dient der Ansteuerung des Stromstellers 7 und ist zu diesem Zweck mit dem Stromsteller 7 verbunden. Weiterhin ist die Aktuatorsteuereinrichtung 11 zum Entgegennehmen des jeweils erfassten Betriebsstroms I (genauer: des entsprechenden Messwertes) mit der Erfassungseinrichtung 10 verbunden. Die Aktuatorsteuereinrichtung 11 ist derart ausgebildet, dass sie in einem Normalbetrieb ein Betriebsverfahren realisiert, wie es nachstehend in Verbindung mit FIG 6 näher erläutert wird. Die Aktuatorsteuereinrichtung 11 kann als softwareprogrammierbare Einrichtung ausgebildet sein. In diesem Fall ist die Aktuatorsteuereinrichtung 11 mit einem entsprechenden Steuerprogramm programmiert, das Maschinencode umfasst, der die entsprechende Ausbildung der Aktuatorsteuereinrichtung 11 bewirkt. Alternativ kann die Aktuatorsteuereinrichtung 11 in Hardware programmiert sein, beispielsweise in einer Ausgestaltung als ASIC.

Gemäß FIG 6 setzt die Aktuatorsteuereinrichtung 11 in einem Schritt S1 den Zustand Z der Haltebremse 5 auf den Wert 0. Der Wert 0 entspricht, wie bereits erwähnt, dem Sperrzustand.

In einem Schritt S2 prüft die Aktuatorsteuereinrichtung 11, ob ihr von der Antriebssteuerung 4 als Sollzustand Z* der Haltebremse 5 der Freigabezustand übermittelt wurde. Sie prüft also, ob der Sollzustand Z* den Wert 1 aufweist. Wenn dies der Fall ist, prüft die Aktuatorsteuereinrichtung 11 in einem Schritt S3, ob der Zustand Z der Haltebremse 5 bereits dem Freigabezustand entspricht, der Zustand Z also ebenfalls den Wert 1 aufweist, und somit die Haltebremse 5 bereits in den Freigabezustand überführt wurde. Wenn dies der Fall ist, geht die Aktuatorsteuereinrichtung 11 zu weiteren Schritten S4 bis S10 über. Die Schritte S4 bis S10 stellen den Kerngegenstand der vorliegenden Erfindung dar.

Im Schritt S4 nimmt die Aktuatorsteuereinrichtung 11 einen erfassten Messwert für den Betriebsstrom I entgegen.

Im Schritt S5 prüft die Aktuatorsteuereinrichtung 11, ob der Betriebsstrom I einen vorbestimmten Haltestrom I3 übersteigt (gegebenenfalls um mehr als eine vorbestimmte Schranke übersteigt). Der Haltestrom I3 liegt - siehe FIG 4 - oberhalb des Mindesthaltestroms 12. Er kann beispielsweise bei dem 1,1-fachen bis 1,3-fachen des Mindesthaltestroms I2 liegen.

Wenn der Betriebsstrom I den Haltestrom I3 übersteigt, ergreift die die Aktuatorsteuereinrichtung 11 im Schritt S6 Maßnahmen, die ein Absinken des Betriebsstroms I bewirken. Beispielsweise kann die Aktuatorsteuereinrichtung 11 im Schritt S6 eine Sollbetriebsspannung U*, welche der Stromsteller 7 an den Aktuator 6 anlegen soll, verringern. Sodann geht die Aktuatorsteuereinrichtung 11 zum Schritt S7 über. Im Schritt S7 ermittelt die Aktuatorsteuereinrichtung 11 eine Ansteuerung C für den Stromsteller 7. Die Ermittlung erfolgt, soweit erforderlich unter Berücksichtigung der im Schritt S6 ergriffenen Maßnahmen. Im Schritt S8 steuert die Aktuatorsteuereinrichtung 11 schließlich den Stromsteller 7 entsprechend der ermittelten Ansteuerung C an.

Wenn der Betriebsstrom I den Haltestrom I3 nicht über-steigt, prüft die Aktuatorsteuereinrichtung 11 im Schritt S9, ob der Betriebsstrom I den Haltestrom I3 unterschreitet (gegebenenfalls um mehr als eine vorbestimmte Schranke unterschreitet). Wenn der Betriebsstrom I den Haltestrom I3 unterschreitet, ergreift die die Aktuatorsteuereinrichtung 11 im Schritt S10 Maßnahmen, die ein Ansteigen des Betriebsstroms I bewirken. Beispielsweise kann die Aktuatorsteuereinrichtung 11 im Schritt S10 die Sollbetriebsspannung U* erhöhen. Sodann geht die Aktuatorsteuereinrichtung 11 wieder zum Schritt S7 über.

Wenn der Betriebsstrom I den Haltestrom I3 weder über-steigt noch unterschreitet, geht die Aktuatorsteuereinrichtung 11 direkt zum Schritt S7 über. In diesem Fall bleibt die Ansteuerung C des Stromstellers 7 unverändert.

Sodann geht die Aktuatorsteuereinrichtung 11 wieder zum Schritt S2 zurück, so dass die Aktuatorsteuereinrichtung 11 die Schritte S2 bis S10 iterativ immer wieder durchläuft.

Da das Überführen der Haltebremse 5 in den Freigabezustand vorausgesetzt hat, dass der Mindestanzugsstrom I1 über-schritten wurde, bewirkt die wiederholte Ausführung der Schritte S2 bis S10 zunächst, dass die Aktuatorsteuereinrichtung 11 den Betriebsstrom I auf den Haltestrom I3 absenkt. Nachfolgend bewirkt die wiederholte Ausführung der Schritte S2 bis S10 weiterhin, dass die Aktuatorsteuereinrichtung 11 den Betriebsstrom I auf dem Haltestrom I3 hält. In beiden Abschnitten dieser Vorgehensweise führt die Aktuatorsteuereinrichtung 11 die Ansteuerung C des Stromstellers 7 bei Bedarf immer wieder entsprechend nach. Weiterhin nimmt die Aktuatorsteuereinrichtung 11 sowohl im frühen Stadium (während des Absenkens auf den Haltestrom I3) als auch danach (während des Haltens auf dem Haltestrom I3) immer wieder den jeweiligen Messwert für den Betriebsstrom I entgegen, um die entsprechenden Abweichungen des Betriebsstroms I vom Haltestrom I3 feststellen zu können.

Wenn der Aktuatorsteuereinrichtung 11 von der Antriebs-steuerung 4 als Sollzustand Z* der Haltebremse 5 der Freigabezustand übermittelt wird, der Zustand Z der Haltebremse 5 jedoch noch dem Sperrzustand entspricht, muss ein Überführen der Haltebremse 5 in den Freigabezustand erfolgen. Das Überführen der Haltebremse 5 in den Freigabezustand muss dann erfolgen, wenn die Aktuatorsteuereinrichtung 11 im Schritt S3 feststellt, dass der Zustand Z der Haltebremse 5 noch nicht dem Freigabezustand entspricht.

Für das Überführen der Haltebremse 5 in den Freigabezustand sind verschiedene Vorgehensweisen möglich. Bevorzugt ist derzeit eine Vorgehensweise, wie sie nachstehend in Verbindung mit FIG 6 und den dortigen Schritten S11 bis S15 erläutert wird.

Im Schritt S11 steuert die Aktuatorsteuereinrichtung 11 den Stromsteller 7 derart an, dass der dem Aktuator 6 zu-geführte Betriebsstrom I auf einen Wert oberhalb des Mindestanzugsstroms I1 ansteigt. Beispielsweise kann die Aktuatorsteuereinrichtung 11 die Ansteuerung C des Strom-stellers 7 derart ermitteln, dass der Betriebsstrom I auf einen Anzugsstrom I4 (siehe FIG 4) geregelt wird, der oberhalb des Mindestanzugsstroms I1 liegt. Auch ist es möglich, die Ansteuerung C des Stromstellers 7 derart zu ermitteln, dass eine vorbestimmte, hinreichend hohe Betriebsspannung U an den Aktuator 6 angelegt wird.

Im Schritt S12 nimmt die Aktuatorsteuereinrichtung 11 einen erfassten Messwert für den Betriebsstrom I entgegen. Im Schritt S13 prüft die Aktuatorsteuereinrichtung 11 den erfassten Messwert auf einen kurzzeitigen Einbruch. Solange diese Prüfung negativ verläuft, also kein Einbruch erkannt wird, geht die Aktuatorsteuereinrichtung 11 wieder zum Schritt S2 zurück. Erkennt die Aktuatorsteuereinrichtung 11 hingegen einen kurzzeitigen Einbruch, interpretiert die Aktuatorsteuereinrichtung 11 diesen Einbruch als Überführen der Haltebremse 5 in den Freigabezustand. Sie setzt daher im Schritt S14 den Zustand Z der Haltebremse 5 auf den Wert 1.

Auch jetzt geht die Aktuatorsteuereinrichtung 11 wieder zum Schritt S2 zurück. Bei der nächsten Ausführung des Schrittes S3 ist die dortige Prüfung jedoch positiv, so dass die Aktuatorsteuereinrichtung 11 nicht erneut zum Schritt S11, sondern zum Schritt S4 übergeht. Somit werden nunmehr die Schritte S4 bis S10 ausgeführt, in denen die Aktuatorsteuereinrichtung 11 den Betriebsstrom I auf den Haltestrom I3 absenkt und dort hält.

Der Schritt S15 ist nicht mehr zwingend. Vorzugsweise ist er jedoch vorhanden. Im Schritt S15 übermittelt die Aktuatorsteuereinrichtung 11 eine Freigabemeldung M1 an die Antriebssteuerung 4.

Wenn der Aktuatorsteuereinrichtung 11 von der Antriebs-steuerung 4 als Sollzustand Z* der Haltebremse 5 der Sperrzustand (Z* = 0) übermittelt wird, geht die Aktuatorsteuereinrichtung 11 vom Schritt S2 zu einem Schritt S16 über, indem sie die Haltebremse 5 in den Sperrzustand überführt oder sie im Sperrzustand hält. Für das Überführen der Haltebremse 5 in den Sperrzustand und das Halten der Haltebremse 5 im Sperrzustand sind verschiedene Vorgehensweisen möglich. Bevorzugt ist derzeit eine Vorgehens-weise, wie sie nachstehend in Verbindung mit FIG 6 und den dortigen Schritten S16 bis S21 erläutert wird.

Im Schritt S16 sperrt die Aktuatorsteuereinrichtung 11 den Stromsteller 7. Dadurch klingt der Betriebsstrom I allmählich ab.

Im Schritt S17 prüft die Aktuatorsteuereinrichtung 11, ob der Zustand Z der Haltebremse 5 dem Sperrzustand (Z = 0) entspricht. Wenn dies der Fall ist, sind keine weiteren Maßnahmen erforderlich. Die Aktuatorsteuereinrichtung 11 kann direkt wieder zum Schritt S2 zurückgehen.

Wenn der Zustand Z der Haltebremse 5 noch nicht dem Sperr-zustand entspricht, geht die Aktuatorsteuereinrichtung 11 zum Schritt S18 über. Im Schritt S18 nimmt die Aktuatorsteuereinrichtung 11 einen erfassten Messwert für den Betriebsstrom I entgegen. Im Schritt S19 prüft die Aktuatorsteuereinrichtung 11 den erfassten Messwert auf einen kurzzeitigen Anstieg. Solange diese Prüfung negativ ver-läuft, also kein Anstieg erkannt wird, geht die Aktuatorsteuereinrichtung 11 wieder zum Schritt S2 zurück. Erkennt die Aktuatorsteuereinrichtung 11 hingegen einen kurzzeitigen Anstieg, interpretiert die Aktuatorsteuereinrichtung 11 diesen Anstieg als Überführen der Haltebremse 5 in den Sperrzustand. Sie setzt daher im Schritt S20 den Zustand Z der Haltebremse 5 auf den Wert 0. Weiterhin übermittelt die Aktuatorsteuereinrichtung 11 im Schritt S21 eine Sperrmeldung M2 an die Antriebssteuerung 4.

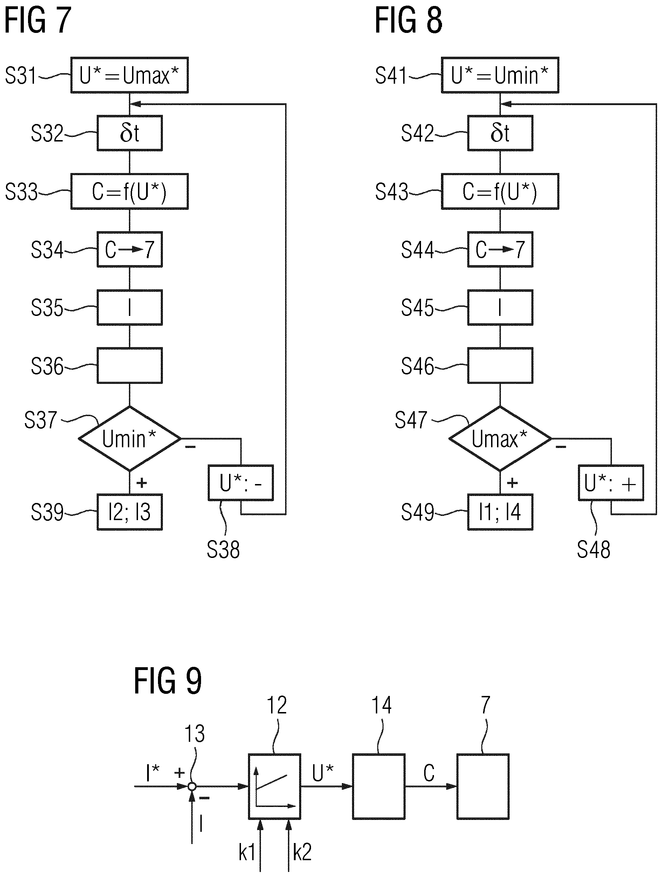

Nachstehend wird in Verbindung mit FIG 7 eine mögliche Vorgehensweise erläutert, die von der Aktuatorsteuereinrichtung 11 in einem Sonderbetrieb ausgeführt werden kann. Im Rahmen der Vorgehensweise von FIG 7 wird der Haltestrom I3 ermittelt. Die Vorgehensweise von FIG 7 setzt voraus, dass die Haltebremse 5 zuvor in den Freigabezustand überführt wurde.

Gemäß FIG 7 setzt die Aktuatorsteuereinrichtung 11 in ei-nem Schritt S31 die Sollbetriebsspannung U* auf einen Maximalwert Umax*. In einem Schritt S32 wartet die Aktuatorsteuereinrichtung 11 eine (kleine) Wartezeit δt ab. In einem Schritt S33 ermittelt die Aktuatorsteuereinrichtung 11, basierend auf der Sollbetriebsspannung U*, die zugehörige Ansteuerung C des Stromstellers 7. In einem Schritt S34 steuert die Aktuatorsteuereinrichtung 11 den Stromsteller 7 entsprechend an.

In einem Schritt S35 nimmt die Aktuatorsteuereinrichtung 11 den jeweiligen Messwert für den Betriebsstrom I entgegen. Den Messwert kann die Aktuatorsteuereinrichtung 11 entweder sofort auswerten oder, wie in FIG 7 dargestellt, in einem Schritt S36 speichern.

In einem Schritt S37 prüft die Aktuatorsteuereinrichtung 11, ob die Sollbetriebsspannung U* einen Minimalwert Umin* erreicht hat, beispielsweise auf Null abgesunken ist. Solange dies nicht der Fall ist, verringert die Aktuatorsteuereinrichtung 11 in einem Schritt S38 die Sollbetriebsspannung U*. Sodann geht sie zum Schritt S32 zurück.

Wenn die Sollbetriebsspannung U* den Minimalwert Umin* erreicht hat, geht die Aktuatorsteuereinrichtung 11 zu einem Schritt S39 über. Im Schritt S39 erfolgt die Auswertung des Betriebsstroms I, konkret die Prüfung, wann ein kurz-zeitiger Anstieg erfolgte. Anhand des Messwertes für den Betriebsstrom I kurz vor dem Anstieg ermittelt die Aktuatorsteuereinrichtung 11 den Haltestrom I3. Beispielsweise kann die Aktuatorsteuereinrichtung 11 zunächst den Mindesthaltestrom I2 ermitteln und hierauf aufbauend den Haltestrom I3 ermitteln.

Der Schritt S32, also das Abwarten der kleinen Wartezeit δt bewirkt, dass die Aktuatorsteuereinrichtung 11 die Betriebsspannung U des Stromstellers 7 nicht abrupt, sondern allmählich verringert.

Die sofortige oder spätere Auswertung des Messwertes für den Betriebsstrom I entspricht einer Überwachung des Mess-wertes auf einen kurzzeitigen Anstieg. Dieser Anstieg kann, wie in Verbindung mit den FIG 3 bis 5 erläutert, von der Aktuatorsteuereinrichtung als Überführen der Haltebremse 5 in den Sperrzustand und damit als Unterschreiten des Mindesthaltestroms I2 interpretiert werden. Somit kann die Aktuatorsteuereinrichtung 11 basierend auf dem Betriebsstrom I kurz vor dem Anstieg den Haltestrom I3 ermitteln.

Nachstehend wird in Verbindung mit FIG 8 eine mögliche Vorgehensweise erläutert, die von der Aktuatorsteuereinrichtung 11 ebenfalls in einem Sonderbetrieb ausgeführt werden kann. Im Rahmen der Vorgehensweise von FIG 8 wird der Anzugsstrom I4 ermittelt. Die Vorgehensweise von FIG 8 setzt voraus, dass die Haltebremse 5 sich zunächst im Sperrzustand befindet.

Die Vorgehensweise von FIG 8 kann mit der Vorgehensweise von FIG 7 kombiniert werden. In diesem Fall wird die Vorgehensweise von FIG 8 in der Regel zuerst ausgeführt.

Gemäß FIG 7 setzt die Aktuatorsteuereinrichtung 11 in einem Schritt S41 die Sollbetriebsspannung U* auf den Minimalwert Umin*. In einem Schritt S42 wartet die Aktuatorsteuereinrichtung 11 die (kleine) Wartezeit δt ab. In einem Schritt S43 ermittelt die Aktuatorsteuereinrichtung 11, basierend auf der Sollbetriebsspannung U*, die zugehörige Ansteuerung C des Stromstellers 7. In einem Schritt S44 steuert die Aktuatorsteuereinrichtung 11 den Stromsteller 7 entsprechend an.

In einem Schritt S45 nimmt die Aktuatorsteuereinrichtung 11 den jeweiligen Messwert für den Betriebsstrom I entgegen. Den Messwert kann die Aktuatorsteuereinrichtung 11 entweder sofort auswerten oder, wie in FIG 8 dargestellt, in einem Schritt S46 speichern.

In einem Schritt S47 prüft die Aktuatorsteuereinrichtung 11, ob die Sollbetriebsspannung U* den Maximalwert Umax* erreicht hat. Solange dies nicht der Fall ist, erhöht die Aktuatorsteuereinrichtung 11 in einem Schritt S48 die Sollbetriebsspannung U*. Sodann geht sie zum Schritt S42 zurück.

Wenn die Sollbetriebsspannung U* Maximalwert Umax* erreicht hat, geht die Aktuatorsteuereinrichtung 11 zu einem Schritt S49 über. Im Schritt S49 erfolgt die Auswertung des Betriebsstroms I, konkret die Prüfung, wann ein kurzzeitiger Einbruch erfolgte. Anhand des Messwertes für den Betriebsstrom I kurz vor und/oder kurz nach dem Einbruch ermittelt die Aktuatorsteuereinrichtung 11 den Anzugsstrom I4. Beispielsweise kann die Aktuatorsteuereinrichtung 11 zunächst den Mindestanzugsstrom I1 ermitteln und hierauf aufbauend den Anzugsstrom I4 ermitteln.

Der Schritt S42, also das Abwarten der kleinen Wartezeit δt bewirkt wie zuvor bei FIG 7, dass die Aktuatorsteuereinrichtung 11 die Betriebsspannung U des Stromstellers 7 nicht abrupt, sondern allmählich verringert.

Die sofortige oder spätere Auswertung des Messwertes für den Betriebsstrom I entspricht einer Überwachung des Mess-wertes auf einen kurzzeitigen Einbruch. Dieser Einbruch kann, wie in Verbindung mit den FIG 3 bis 5 erläutert, von der Aktuatorsteuereinrichtung als Überführen der Halte-bremse 5 in den Freigabezustand und damit als Überschreiten des Mindestanzugsstroms I1 interpretiert werden. Somit kann die Aktuatorsteuereinrichtung 11 basierend auf dem Betriebsstrom I kurz vor und/oder kurz nach dem Einbruch den Anzugsstrom I4 ermitteln.

Gemäß FIG 9 implementiert die Aktuatorsteuereinrichtung 11 zum Regeln des Betriebsstroms I einen Stromregler 12. Der Stromregler 12 arbeitet zumindest im Normalbetrieb, oft-mals auch im Sonderbetrieb.

Der Stromregler 12 umfasst einen Knotenpunkt 13, in dem die Abweichung des Betriebsstroms I von einem Sollbetriebsstrom I* (Regelabweichung) ermittelt wird. Der Sollbetriebsstrom I* kann, je nach Betriebssituation, beispielsweise dem Haltestrom I3, dem Anzugsstrom I4 oder dem Wert 0 (für das Überführen der Haltebremse 5 in den Sperr-zustand) entsprechen.

Der Stromregler 12 ist (mindestens) als PI-Regler ausgebildet. Er ermittelt daher anhand der Regelabweichung einen Proportional-Korrekturanteil und einen Integral-Korrekturanteil. Der Proportional-Korrekturanteil ergibt sich direkt als Produkt eines konstanten Verstärkungsfaktors k1 und der Regelabweichung. Im Rahmen der Ermittlung des Integral-Korrekturanteils wird eine Integrationszeit-konstante k2 verwertet. Das Ausgangssignal des Stromreglers 12 ergibt sich als Summe der verschiedenen Korrektur-anteile. Diese Vorgehensweise ist Fachleuten allgemein bekannt und vertraut. Das Ausgangssignal des Stromreglers kann beispielsweise die Sollbetriebsspannung U* sein, die einem Ermittlungsglied 14 zugeführt wird, das seinerseits die Ansteuerung C für den Stromsteller 7 ermittelt.

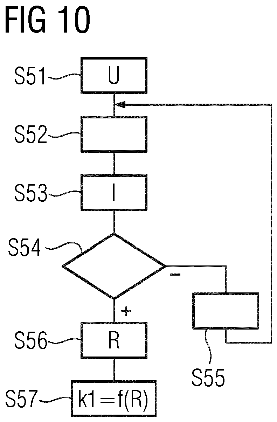

Die Ermittlung der Integrationszeitkonstante k2 kann auf konventionelle Art und Weise erfolgen. Die Ermittlung des Verstärkungsfaktors k1 erfolgt vorzugsweise durch die Aktuatorsteuereinrichtung 11 in einem entsprechenden Sonderbetrieb. Dieser Sonderbetrieb wird nachfolgend in Verbindung mit FIG 10 erläutert.

Gemäß FIG 10 legt die Aktuatorsteuereinrichtung 11 in einem Schritt S51 die Betriebsspannung U (oder den zugehörigen Sollwert U*) fest. In einem Schritt S52 steuert die Aktuatorsteuereinrichtung 11 den Stromsteller 7 so an, dass er den Aktuator 6 mit der Betriebsspannung U beaufschlagt. In einem Schritt S53 erfasst die Aktuatorsteuereinrichtung 11 den sich ergebenden Betriebsstrom I (bzw. den entsprechenden Messwerte).

In einem Schritt 54 prüft die Aktuatorsteuereinrichtung 11, die Festlegung der Betriebsspannungen U und die Erfassung der zugehörigen Betriebsströme I abgeschlossen ist. Wenn dies nicht der Fall ist, variiert die Aktuatorsteuereinrichtung 11 in einem Schritt S55 die Betriebsspannung U und geht sodann zum Schritt S52 zurück.

Wenn die Festlegung der Betriebsspannungen U und die Erfassung der zugehörigen Betriebsströme I abgeschlossen ist, geht die Aktuatorsteuereinrichtung 11 zu einem Schritt S56 über. Im Schritt S56 ermittelt die Aktuatorsteuereinrichtung 11 anhand der Betriebsspannungen U und der jeweils zugehörigen Betriebsströme I einen Widerstand R des Aktuators 6 (genauer: den Wert des Widerstands). Hierauf aufbauend bestimmt die Aktuatorsteuereinrichtung 11 in einem Schritt S57 den Verstärkungsfaktor k1.

Die Vorgehensweise von FIG 10 kann in die Vorgehensweise der FIG 7 und/oder die Vorgehensweise der FIG 8 integriert sein.

Zusammengefasst betrifft die vorliegende Erfindung somit folgenden Sachverhalt:
Einem elektrischen Antrieb 1, insbesondere einem Servomotor, ist eine Haltebremse 5 zugeordnet. Die Haltebremse 5 wird mittels eines elektromagnetischen Aktuators 6 betätigt. Der Aktuator 6 überführt die Haltebremse 5 von einem Sperrzustand, in dem die Haltebremse 5 den elektrischen Antrieb 1 blockiert, in einen Freigabezustand, in dem die Haltebremse 5 den elektrischen Antrieb 1 nicht blockiert, sobald der Aktuator 6 mit einem Betriebsstrom I oberhalb eines Mindestanzugsstroms I1 beaufschlagt wird. Der Aktuator 6 hält die Haltebremse 5 im Freigabezustand, solange der Aktuator 6 nach dem Überführen der Haltebremse 5 in den Freigabezustand mit einem Betriebsstrom I oberhalb eines Mindesthaltestroms I2 beaufschlagt wird, wobei der Mindesthaltestrom I2 kleiner als der Mindestanzugsstrom I1 ist. Der Aktuator 6 überführt die Haltebremse 5 vom Freigabezustand in den Sperrzustand, sobald der Aktuator 6 nicht mehr mit einem Betriebsstrom I beaufschlagt wird oder nur mit einem Betriebsstrom I unterhalb des Mindesthaltestroms I2 beaufschlagt wird. In einem Normalbetrieb nimmt eine Aktuatorsteuereinrichtung 11 für den Aktuator 6 nach einem Überführen der Haltebremse 5 in den Freigabezustand immer wieder einen erfassten Messwert für den Betriebsstrom I entgegen und führt die Ansteuerung C eines elektronischen Stromstellers 7, über welchen der Aktuator 6 mit dem Betriebsstrom I versorgt wird, bei Bedarf immer wieder derart nach, dass der Betriebsstrom I auf einen vorbestimmten Haltestrom I3 oberhalb des Mindesthaltestroms I2 abgesenkt und dort gehalten wird.

Die vorliegende Erfindung weist viele Vorteile auf. Der Aufbau ist einfach, kostengünstig und zuverlässig. Die elektrischen Verluste können reduziert werden. Auch können Wartezeiten, die für das zuverlässige Überführen der Haltebremse 5 vom Sperrzustand in den Freigabezustand oder umgekehrt abgewartet werden müssen, geringgehalten werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Haltebremse (5) eines elektrischen Antriebs (1), insbesondere eines Servomotors,
- wobei die Haltebremse (5) mittels eines elektromagnetischen Aktuators (6) betätigt wird, wobei der Aktuator (6)
- die Haltebremse (5) von einem Sperrzustand, in dem die Haltebremse (5) den elektrischen Antrieb (1) blockiert, in einen Freigabezustand überführt, in dem die Haltebremse (5) den elektrischen Antrieb (1) nicht blockiert, sobald der Aktuator (6) mit einem Betriebsstrom (I) oberhalb eines Mindestanzugsstroms (I1) beaufschlagt wird,
- die Haltebremse (5) im Freigabezustand hält, solange der Aktuator (6) nach dem Überführen der Haltebremse (5) in den Freigabezustand mit einem Betriebsstrom (I) oberhalb eines Mindesthaltestroms (I2) beaufschlagt wird, wobei der Mindesthaltestrom (I2) kleiner als der Mindestanzugsstrom (I1) ist, und
- die Haltebremse (5) vom Freigabezustand in den Sperr-zustand überführt, sobald der Aktuator (6) nicht mehr mit einem Betriebsstrom (I) beaufschlagt wird oder nur mit einem Betriebsstrom (I) unterhalb des Mindesthaltestroms (I2) beaufschlagt wird,
- wobei in einem Normalbetrieb eine Aktuatorsteuereinrichtung (11) für den Aktuator (6) nach einem Überführen der Haltebremse (5) in den Freigabezustand immer wieder einen erfassten Messwert für den Betriebsstrom (I) entgegennimmt und die Ansteuerung (C) eines elektronischen Stromstellers (7), über welchen der Aktuator (6) mit dem Betriebsstrom (I) versorgt wird, bei Bedarf immer wieder derart nachführt, dass der Betriebsstrom (I) auf einen vorbestimmten Haltestrom (I3) oberhalb des Mindesthaltestroms (I2) abgesenkt und dort gehalten wird.

2. Betriebsverfahren nach Anspruch 1,
**dadurch gekennzeichnet,**
**dass** im Normalbetrieb die Aktuatorsteuereinrichtung (11) zum Überführen der Haltebremse (5) in den Freigabezustand
- den elektronischen Stromsteller (7) derart ansteuert, dass der dem Aktuator (6) zugeführte Betriebsstrom (I) auf einen Wert oberhalb des Mindestanzugsstroms (I1) ansteigt,
- immer wieder einen erfassten Messwert für den Betriebsstrom (I) entgegennimmt und den erfassten Messwert auf einen kurzzeitigen Einbruch überwacht,
- die Erkennung eines kurzzeitigen Einbruchs des Betriebs-stroms (I) als Überführen der Haltebremse (5) in den Freigabezustand interpretiert und
- unmittelbar nachfolgend den Betriebsstrom (I) auf den Haltestrom (I3) absenkt und/oder eine Freigabemeldung (M1) an eine Antriebssteuerung (4) für den elektrischen Antrieb (1) übermittelt.

3. Betriebsverfahren nach Anspruch 2,
**dadurch gekennzeichnet,**
**dass** die Aktuatorsteuereinrichtung (11) in einem Sonderbetrieb
- den Stromsteller (7) derart ansteuert, dass eine Betriebsspannung (U), mit welcher der Aktuator (6) beaufschlagt wird, allmählich erhöht wird,
- während des allmählichen Erhöhens der Betriebsspannung (U) immer wieder einen erfassten Messwert für den Betriebsstrom (I) entgegennimmt und den erfassten Messwert auf einen kurzzeitigen Einbruch überwacht,
- die Erkennung eines kurzzeitigen Einbruchs des Betriebsstroms (I) als Überführen der Haltebremse (5) in den Freigabezustand interpretiert und
- anhand des Messwertes für den Betriebsstrom (I) kurz vor und/oder kurz nach dem Einbruch den Mindestanzugsstrom (I2) ermittelt.

4. Betriebsverfahren nach Anspruch 1, 2 oder 3,
**dadurch gekennzeichnet,**
**dass** die Aktuatorsteuereinrichtung (11) in einem Sonderbetrieb
- den Stromsteller (7) nach einem Überführen der Haltebremse (5) in den Freigabezustand derart ansteuert, dass eine Betriebsspannung (U), mit welcher der Aktuator (6) beaufschlagt wird, allmählich verringert wird,
- während des allmählichen Verringerns der Betriebsspannung (U) immer wieder einen erfassten Messwert für den Betriebsstrom (I) entgegennimmt und den erfassten Messwert auf einen kurzzeitigen Anstieg überwacht,
- die Erkennung eines kurzzeitigen Anstiegs des Betriebs-stroms (I) als Überführen der Haltebremse (5) in den Sperrzustand interpretiert und
- anhand des Messwertes für den Betriebsstrom (I) kurz vor dem Anstieg den Haltestrom (I3) für den Normalbetrieb ermittelt.

5. Betriebsverfahren nach einem der obigen Ansprüche,
**dadurch gekennzeichnet,**
**dass** die Aktuatorsteuereinrichtung (11) im Normalbetrieb zum Überführen der Haltebremse (5) in den Sperrzustand
- den Stromsteller (7) sperrt, so dass der Betriebsstrom (I) allmählich abklingt,
- immer wieder einen erfassten Messwert für den Betriebsstrom (I) entgegennimmt und den erfassten Messwert auf einen kurzzeitigen Anstieg überwacht,
- die Erkennung eines kurzzeitigen Anstiegs des Betriebsstroms (I) als Überführen der Haltebremse (5) in den Sperrzustand interpretiert und
- aufgrund des Erkennens des kurzzeitigen Anstiegs des Betriebsstroms (I) eine Sperrmeldung (M2) an eine Antriebssteuerung (4) für den elektrischen Antrieb (1) übermittelt.

6. Betriebsverfahren nach einem der obigen Ansprüche,
**dadurch gekennzeichnet,**
- **dass** die Aktuatorsteuereinrichtung (11) den Betriebsstrom (I) im Normalbetrieb mittels eines Stromreglers (12) regelt, der anhand der Abweichung des Betriebsstroms (I) von einem Sollbetriebsstrom (I*) einen Proportional-Korrekturaneil und einen Integral-Korrekturanteil ermittelt, welche beide in die Ermittlung der Ansteuerung des Stromstellers (7) eingehen,
- **dass** der Proportional-Korrekturanteil sich als Produkt eines konstanten Verstärkungsfaktors (k1) und der Abwei-chung des Betriebsstroms (I) vom Sollbetriebsstrom (I*) ergibt,
- **dass** die Aktuatorsteuereinrichtung (11) in einem Sonderbetrieb eine Betriebsspannung (U), mit welcher der Aktuator (6) beaufschlagt wird, variiert und den sich jeweils ergebenden Betriebsstrom (I) erfasst,
- **dass** die Aktuatorsteuereinrichtung (11) anhand der Betriebsspannungen (U) und der jeweils zugehörigen Betriebsströme (I) einen Widerstand (R) des Aktuators (6) ermittelt und
- **dass** die Aktuatorsteuereinrichtung (11) den Verstärkungsfaktor (k1) anhand des ermittelten Widerstands (R) bestimmt.

7. Antriebsanordnung,
- wobei die Antriebsanordnung einen elektrischen Antrieb (1) umfasst, insbesondere einen Servomotor,
- wobei die Antriebsanordnung eine Haltebremse (5) um-fasst, die mit dem elektrischen Antrieb (1) derart zusammenwirkt, dass sie den Antrieb (1) in einem Sperrzustand der Haltebremse (5) blockiert und in einem Freigabezustand nicht blockiert,
- wobei die Haltebremse (5) einen elektromagnetischen Aktuator (6) aufweist, mittels dessen die Haltebremse (5) durch Beaufschlagen des Aktuators (6) mit einem Betriebsstrom (I) oberhalb eines Mindestanzugsstroms (I1) vom Sperrzustand in den Freigabezustand überführbar ist, nach dem Überführen in den Freigabezustand durch Beaufschlagen des Aktuators (6) mit einem Betriebsstrom (I) oberhalb eines Mindesthaltestroms (I2), der kleiner als der Mindestanzugsstrom (I1) ist, im Freigabezustand haltbar ist und durch Beaufschlagen des Aktuators (6) mit einem Betriebsstrom (I) unterhalb des Mindesthaltestroms (I2) oder Nichtbeaufschlagen mit einem Betriebsstrom (I) vom Freigabezustand in den Sperrzustand überführbar ist,
- wobei die Antriebsanordnung einen elektronischen Strom-steller (7) aufweist, mittels dessen der Aktuator (6) mit dem Betriebsstrom (I) beaufschlagbar ist,
- wobei die Antriebsanordnung eine dem Stromsteller (7) oder dem Aktuator (6) zugeordnete Erfassungseinrichtung (10) zum Erfassen des Betriebsstroms (I) aufweist,
- wobei die Antriebsanordnung eine Aktuatorsteuereinrichtung (11) für den Aktuator (6) aufweist, welche zum Ansteuern des Stromstellers (7) mit dem Stromsteller (7) verbunden ist und zum Entgegennehmen des jeweils erfassten Betriebsstroms (I) mit der Erfassungseinrichtung (10) verbunden ist, und
- wobei die Aktuatorsteuereinrichtung (11) derart ausgebildet ist, insbesondere programmiert ist, dass sie in einem Normalbetrieb nach einem Überführen der Haltebremse (5) in den Freigabezustand von der Erfassungseinrichtung (10) immer wieder einen erfassten Messwert für den Betriebsstrom (I) entgegennimmt und die Ansteuerung des Stromstellers (7) bei Bedarf immer wieder derart nachführt, dass der Betriebsstrom (I) auf einen vorbestimmten Haltestrom (I3) oberhalb des Mindesthaltestroms (I2) abgesenkt und dort gehalten wird.

8. Antriebsanordnung nach Anspruch 7,
**dadurch gekennzeichnet,**
**dass** die Aktuatorsteuereinrichtung (11) derart ausgebildet ist, insbesondere programmiert ist, dass sie die Verfahrensschritte mindestens eines der Ansprüche 2 bis 6 implementiert.
